(19) **Europäisches Patentamt**

**European Patent Office**

**Office européen des brevets**

(11) **EP 0 922 242 B1**

(12) **EUROPEAN PATENT SPECIFICATION**

(45) Date of publication and mention
of the grant of the patent:
**06.10.2004 Bulletin 2004/41**

(51) Int Cl.⁷: **G02B 26/10**, G02B 17/08,
G02B 27/09, H04N 1/028

(21) Application number: **97939463.2**

(22) Date of filing: **28.08.1997**

(86) International application number:
**PCT/US1997/014646**

(87) International publication number:
**WO 1998/009190 (05.03.1998 Gazette 1998/09)**

(54) **OPTICAL SYSTEM FOR A PRINTER**

OPTISCHE VORRICHTUNG FÜR DRUCKER

SYSTEME OPTIQUE POUR APPAREIL D'IMPRESSION LINEAIRE

(84) Designated Contracting States:
**DE FR GB**

(30) Priority: **28.08.1996 US 703985**

(43) Date of publication of application:
**16.06.1999 Bulletin 1999/24**

(73) Proprietor: **Polaroid Corporation
Waltham, MA 02451 (US)**

(72) Inventors:
• **JOHNSON, Bruce, K.
North Andover, MA 01845 (US)**
• **CHAPNIK, Philip, D.
Newton, MA 02166 (US)**

(74) Representative:
**Splanemann Reitzner Baronetzky Westendorp
Patentanwälte
Rumfordstrasse 7
80469 München (DE)**

(56) References cited:
**EP-A- 0 547 493     GB-A- 2 279 845
JP-A- 7 281 095     US-A- 4 192 578
US-A- 5 255 116     US-A- 5 627 689**

• **PATENT ABSTRACTS OF JAPAN vol. 095, no.
010, 30 November 1995 & JP 07 176499 A
(SEMICONDUCTOR ENERGY LAB CO LTD), 14
July 1995,**
• **PATENT ABSTRACTS OF JAPAN vol. 011, no.
243 (P-603), 8 August 1987 & JP 62 051044 A
(HITACHI LTD), 5 March 1987,**

# Description

## Summary of the Invention

The present invention relates generally to optical systems suitable for use in the conversion between a line image of uniform width and an essentially localized, relatively small image, and in particular to line printing systems. The optical systems disclosed comprise a concave mirror, at least one cylindrical optical element, an optional aperture stop, and a spatial radiation modulator. In printing and other such illumination applications, the disclosed optical systems serves to produce a line image, of uniform width and intensity, from a radiation source of a relatively small size. For example, the optical systems are photographic printers which print consecutive lines of pixels of an image onto a photosensitive medium.

The cylindrical optical element, which can be a cylindrical lens or a cylindrical mirror, is positioned in optical alignment with a collimated beam of radiation produced by the concave mirror, and serves to converge or focus the collimated radiation along at least one axis of the collimated beam. A spatial radiation modulator is disposed along the optical path of the optical system. The spatial radiation modulator comprises a plurality of cells, each of which is electronically selectable between radiation-blocking and radiation-transmitting states. Each cell images a pixel which is thus selectable between the two states, to form an image on the photosensitive medium by selectively transmitting the incident focused radiation. Thus, when relative movement occurs between the photosensitive medium and the optical system, consecutive imaging lines are projected onto the photosensitive medium to create an image.

## Brief Description of the Drawings

The foregoing and other objects of this invention, the various features thereof, as well as the invention itself, may be more fully understood from the following description, when read together with the accompanying drawings in which:

Figure 1 is a diagrammatic illustration of an optical system;
Figure 2A is a diagrammatic illustration of an embodiment of an optical system comprising a parabolic mirror;
Figure 2B is a side illustration of the embodiment of Figure 2A;
Figure 3 is a diagrammatic illustration of an embodiment of an optical system comprising a spherical mirror;
Figure 4 is a diagrammatic illustration of an embodiment of an optical system comprising a Schmidt plate;
Figure 5A is diagrammatic illustration of an embodiment of an optical system comprising a cylindrical lens; and,
Figure 5B is a side view of alternative embodiments of the optical system of Fig. 5A, comprising an aperture stop and an optional second cylindrical lens.

## Detailed Description of the Preferred Embodiments

The present invention relates to an optical printer, the various embodiments disclosed are directed to a printing device.

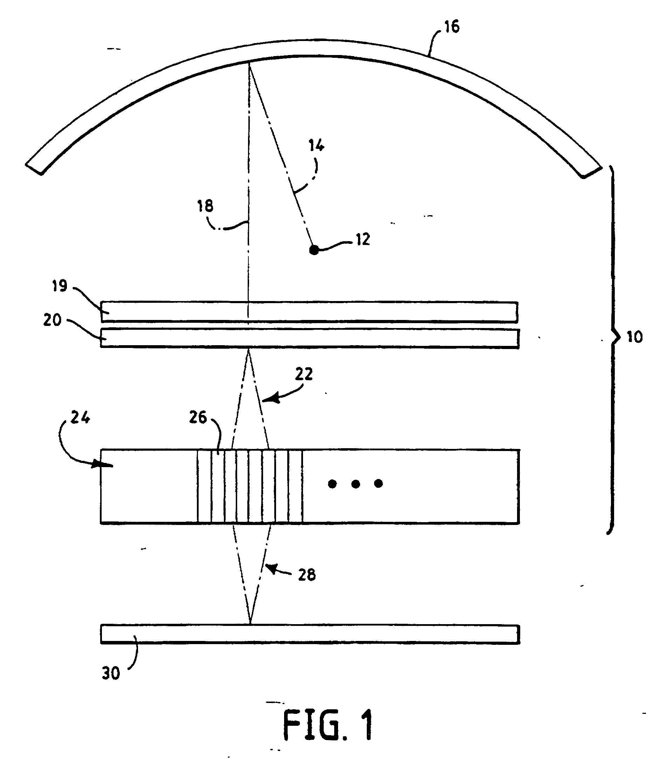

Referring to Figure 1, there is shown an optical system 10 . A radiation source 12 emits radiation 14 which is reflected, as substantially collimated radiation 18, through an optional diffuser 19 and to a spatial radiation modulator 20 by means of a concave mirror 16. Concave mirror 16 may comprise a singly-curved mirror (i.e., a cylindrical surface) or a doubly-curved mirror (i.e., a toroidal surface). In the present specification, a cylindrical optical element is defined as an optical element comprising a lens surface or a mirror surface having a conic or an aspheric cross section in one meridian plane and an infinite radius of curvature in the orthogonal meridian plane. In a preferred embodiment, radiation 14 comprises optical radiation, such as infra-red, visible, or ultra-violet radiation, but use of the invention should not be considered as limited to these wavelengths.

Spatial radiation modulator 20, which may be an array of liquid-crystal shutter devices, is selectively controlled by external electronic means (not shown) so as to convert collimated radiation 18 into image-bearing radiation 22 comprising an array of radiation segments, or pixels. Image-bearing radiation 22 may be transmitted through an optical conductor 24 which serves to focus image-bearing radiation 22 onto an objective surface, such as a photosensitive medium 30, as indicated at 28. In one embodiment, optical conductor 24 comprises an array of graded-index (GRIN) rods 26, each GRIN rod 26 corresponding to a pixel present in image-bearing radiation 22.

Radiation source 12 is comprised of one or more monochrome radiation-emitting devices. In a preferred embodiment, radiation source 12 comprises one or more columns of three light-emitting devices (LEDs) each. In each column are one LED emitting red light, one LED emitting green light, and one LED emitting blue light. Alternatively, radiation source 12 can be a single broadband source of radiation, such as a white-light source, in conjunction with one or more filter devices, such as a color filter wheel.

Concave mirror 16 serves to control the divergence of collimated radiation 18 and to thus minimize any overlap within the array of pixels produced by image-bearing light 22. The path of collimated radiation 18 is substantially orthogonal to both diffuser 19 and photosensitive medium 30. Diffuser sheet 19 serves to produce a more uniform pattern of radiation at spatial radiation monitor 20.

In a preferred embodiment, spatial radiation modulator 20 comprises an array of binary-state liquid crystal cells disposed in an array across photosensitive medium 30. During operation of optical system 10, each cell is placed into one of either a radiation-blocking or radiation-transmissive state. The formation of gray levels at photosensitive medium 30 can be achieved by means of time-delay modulation of the binary-state cells, as is well-known in the art. Alternatively, spatial radiation modulator 20 may comprise cells having multiple, rather than binary, states. It should be understood that the optical systems disclosed herein need not comprise a spatial radiation modulator for operation in accordance with the present invention.

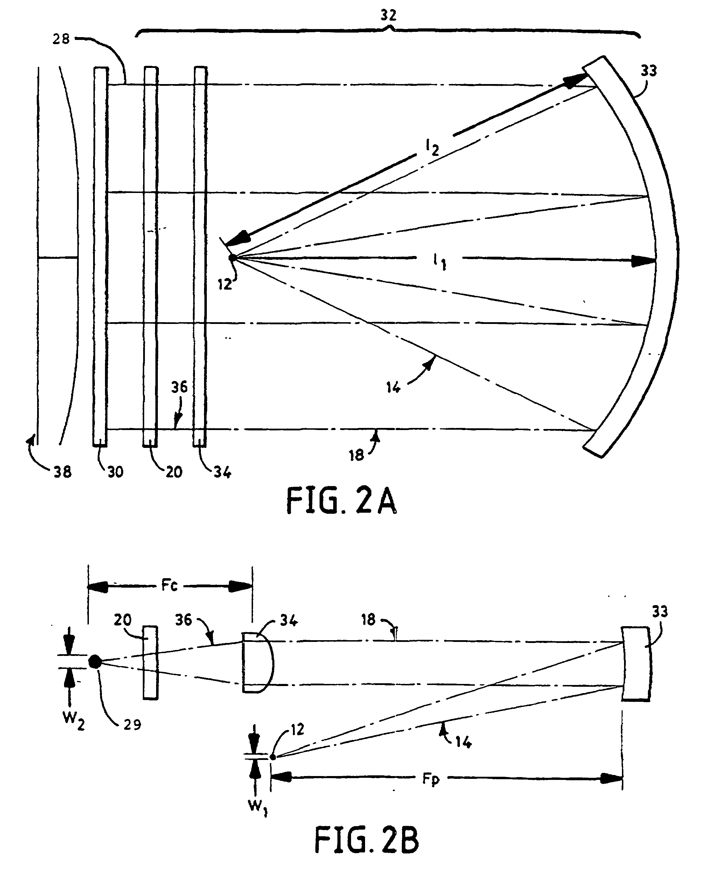

Referring now to Figures 2A and 2B, there is shown an optical system 32 comprising a doubly-curved, parabolic mirror 33, shown here in cross section, and a cylindrical lens 34 disposed between parabolic mirror 33 and spatial radiation modulator 20. Cylindrical lens 34, which is preferably formed of an achromatic material, serves to converge collimated radiation 18 along an axis substantially parallel to the optical axis of cylindrical lens 34 and, correspondingly, parallel to line of imaging radiation 29 produced at photosensitive medium 30. By inspection, it can be seen that the distance from radiation source 12 to the center of parabolic mirror 33 (indicated by $l_1$) is smaller than the distance from radiation source 12 to an edge of parabolic mirror 33 (indicated by $l_2$). This configuration results in an attenuation of focused image-bearing radiation 28 at the edges of photosensitive medium 30, as indicated by graph 38. Graph 38 is a curve representing irradiance, or intensity, plotted as a function of position along photosensitive medium 30.

This attenuation can be quantitatively described by noting that the width of imaging radiation 29 (indicated by $W_2$) is given by the relationship,

$$W_2 = W_1 \, F_c/F_p$$

where $W_1$ is the height of a single radiation emitting device (such as an LED), $F_p$ is the mirror focal length, and $F_c$ is the cylindrical lens focal length, as indicated. $F_p$ is equal to $l_1$ at the center of parabolic mirror 33, and is equal to $l_2$ at an edge of parabolic mirror 33. Imaging radiation 29 is a straight line of radiation focused on a straight portion of photosensitive medium 30. Accordingly, for a constant $W_1$, the width $W_2$ of imaging radiation 29 decreases proportionately toward the edges of photosensitive medium 30. It will be appreciated by one skilled in the relevant art that the present invention can also be practiced by replacing cylindrical lens 34 with a cylindrical mirror, with a corresponding change in the direction of radiation.

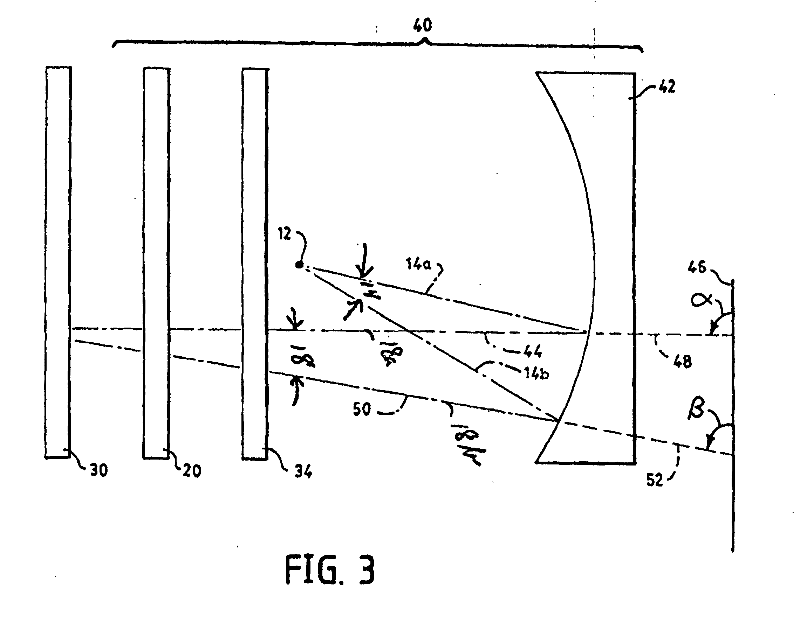

An alternate embodiment is provided by an optical system 40, comprising a doubly-curved, spherical mirror 42, shown in Figure 3. In optical system 40, reflected radiation undergoes an angle change dependent upon the point of reflection from spherical mirror 42. In the example provided, a first beam 14a is reflected from spherical mirror at an essentially collimated angle $\alpha$ relative to mirror transverse axis 46, the reflected beam denoted at 44. A second beam 14b reflects at an essentially convergent angle $\beta$ relative to transverse axis 46, the reflected beam denoted at 50. Because angle $\alpha$ is nearly ninety degrees, reflected radiation 44 passes through cylindrical lens 34 and spatial radiation modulator 20 to impinge upon photosensitive medium 30 at a position only slightly offset from an intended position. Reflected beam 50 follows a similar path through cylindrical lens 34 and spatial radiation modulator 20, but is substantially offset from an intended position at photosensitive medium 30 because of the larger angle $\beta$.

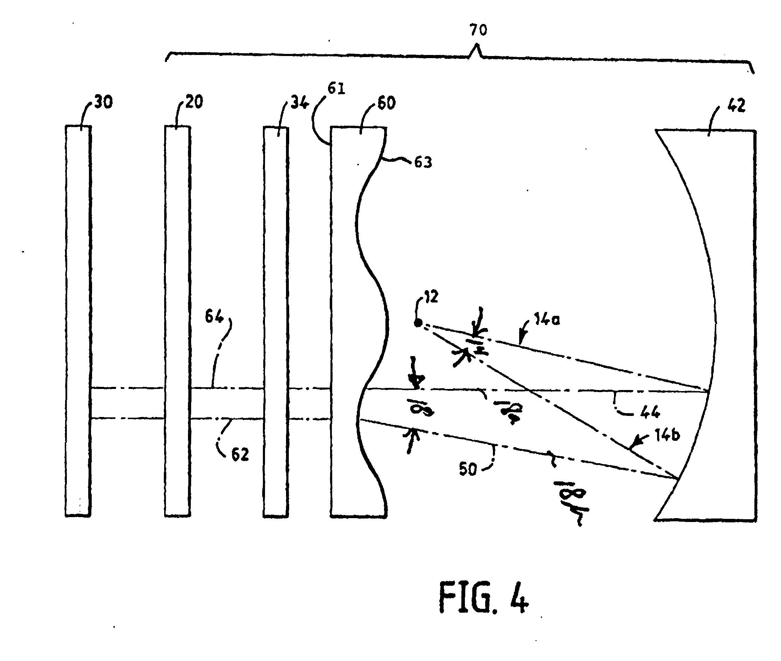

Referring now to Fig. 4, there is shown an optical system 70 comprising a thin, aspherical corrector plate 60, such as a Schmidt plate, through which reflected beams 44 and 50 pass before convergence by means of cylindrical lens 34. In the example provided, corrector plate 60 comprises a plane surface 61 and a correction surface 63, where correction surface 63 is slightly convex at the center of corrector plate 60 and slightly concave at the edge. As is well-known in the relevant art, corrector plate 60 serves to compensate for the spherical aberration of spherical mirror 42 by deforming the optical path of radiation beams 14a and 14b, incident upon spherical mirror 42, so as to form an image at infinity. Nominally, corrector plate 60 is placed at the center of curvature of spherical mirror 42. In the present application, corrector plate 60 can placed closer to spherical mirror 42, as shown, because $W_1$ is a relatively small dimension.

Reflected beams 44 and 50 are thus converted into substantially collimated beams 64 and 62, respectively, by means of corrector plate 60. Cylindrical lens 34 converges collimated beams 62 and 64 through spatial radiation modulator 20 to form a line 29 (not shown) on photosensitive medium 30 with minimal aberration, as described above. It has been determined that the efficiency of optical system 70 is greater than the efficiency of optical system 10 in Fig. 1.

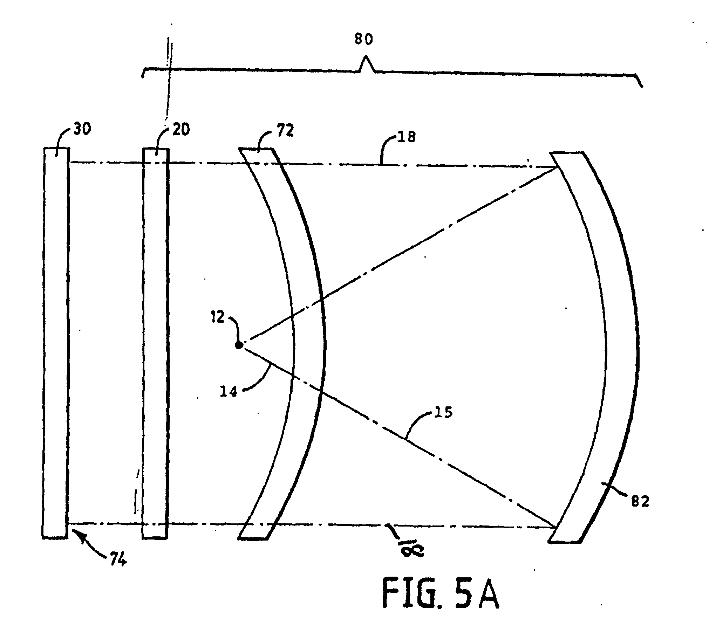

There is shown in Fig. 5A a preferred embodiment of an optical system 80 in accordance with the present invention. Optical system 80 comprises a concave mirror 82 and an arcuate lens 72, or alternatively cylindrical lens 34 (not shown in Fig. 5A), which is used to focus an image line 74 onto photosensitive medium 30. Arcuate lens 72 can be formed by bending cylindrical lens 34 (see Fig. 4) in the plane of the figure, as shown. Alternatively, a bent cylindrical mirror (not shown) can be used in place of arcuate lens 72. Arcuate lens 72, which preferably comprises an achromatic material having a conic or aspherical cross section, serves to modify the imaging radiation formed at the focal plane at photosensitive medium 30 by assuring that the line image thus formed is focused across the irradiated straight section of photosensitive medium 30.

Optical system 80, in Fig. 5A, is configured to maintain the width ($W_2$) of image line 74 at a constant size. This constant width is maintained by the process of first converting radiation 14 into a partially-collimated radiation 15, by means of arcuate lens 72, where partially-collimated radiation 15 is reflected from concave mirror 82. In this embodiment, concave mirror 82 comprises a doubly-curved mirror (here shown in cross section), such as a spherical, parabolic, or ellipsoidal mirror. Collimated radiation 18 passes through arcuate lens 72 and spatial radiation modulator 20 to form image line 74 on photosensitive medium 30, as described above.

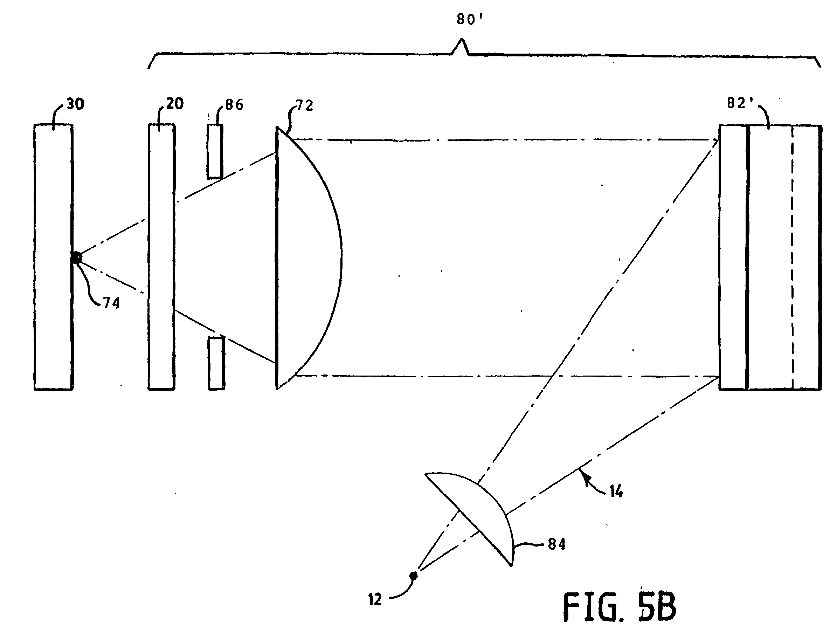

In an alternative embodiment, shown in Fig. 5B, an optical system 80' comprises a singly-curved, cylindrical mirror 82', and radiation 14 is projected onto the surface of cylindrical mirror 82' without first having passed through intervening optics. In yet another alternative embodiment, mirror 82' comprises a convex mirror (not shown), and a source cylindrical lens 84 is disposed between radiation source 12 and convex mirror 82'. In this embodiment, radiation 14 is slightly collimated by means of source cylindrical lens 84 in the same manner as radiation 14 is modified by means of passing through arcuate lens 72 in Fig. 5A. Both optical systems 80 and 80' may further comprise an aperture stop 86 (shown only in Fig. 5B, for clarity) disposed between arcuate lens 72 and photosensitive medium 30. Aperture stop 86 serves to define the convergence angle of radiation forming image line 74. As can be appreciated by one skilled in the relevant art, aperture stop 86 can be otherwise placed along the optical path of optical systems 80 and 80'.

Any of the above-disclosed optical systems can be adapted for use in the detection section of a scanning device by replacing radiation source 12 with a detector device, and replacing the objective surface with an illuminated surface to be scanned. In scanner applications, the radiation propagates in a direction opposite to that present in a printing or illumination application.

The invention may be embodied in other specific forms without departing from the essential characteristics thereof. The present embodiments are, therefore, to be considered in all respects as illustrative and not restrictive, the scope of the invention being indicated by the appended claims rather than by the foregoing description, and all changes which come within the meaning and range of equivalency of the claims are therefore intended to be embraced therein.

**Claims**

1. A photographic printer comprising an optical system (80) suitable for producing spatially consecutive patterned lines (74) of illumination on a photosensitive medium (30), said optical system (80) comprising:

    a radiation source (12) for projecting a beam of light (14);

    a concave mirror (16, 33, 42, 82) disposed in the optical path of the beam of light (14) for producing a reflected substantially collimated beam of light (18);

    a cylindrical lens (34, 72) disposed in the optical path of said collimated beam of light (18) for converging said collimated beam of light along at least one axis and producing a converging beam of light; and

    a spatial light modulator (20) comprising an array of selectively transmissive cells, said spatial light modulator (20) disposed in the optical path of said converging beam of light for selectively passing said converging beam of light to project an image bearing light beam of light onto the photosensitive medium (30), each said selectively transmissive cell being electrically selectable between a light blocking state and a light transmitting state such that selective transmission of said image bearing light produces a patterned line of illumination (74) on the photosensitive medium.

2. The photographic printer according to claim 1 wherein said concave mirror (82) comprises a spherical mirror.

3. The photographic printer according to claims 1 or 2, wherein said optical system (80) further comprises an aspherical corrector plate (60), wherein said corrector plate preferably comprises a Schmidt plate.

4. The photographic printer according to any one of claims 1 to 3, wherein said lens (72) comprises a cylindrical lens which is preferably formed to have an arcuate shape.

**Patentansprüche**

1. Fotodrucker mit einem optischen System (80), mit welchem Belichtungsmuster aus räumlich nebeneinander angeordneten Linien auf einem fotoempfindlichen Medium (30) erzeugt werden können, wobei das optische System (80) umfasst:

    eine Strahlungsquelle (12), um einen Lichtstrahl (14) zu erzeugen;

    einen konkaven Spiegel (16, 33, 42, 82), welcher im optischen Pfad des Lichtstrahls (14) angeordnet ist, um einen reflektierten, im wesentlichen kollimierten Lichtstrahl (18) zu erzeugen;

eine zylinderförmige Linse (34, 72), welche im optischen Pfad des kollimierten Lichtstrahls (18) angeordnet ist, um den kollimierten Lichtstrahl entlang zumindest einer Achse zu konvergieren und einen konvergierten Lichtstrahl zu erzeugen; und

einen Modulator (20) zur räumlichen Modulierung von Licht, welcher eine Anordnung von auswählbar lichtdurchlässigen Zellen umfasst, wobei der Modulator (20) zur räumlichen Modulierung von Licht im optischen Pfad des konvergierenden Lichtstrahls angeordnet ist, um den konvergierenden Lichtstrahl wahlweise passieren zu lassen, um so einen bilderzeugenden Lichtstrahl auf das fotoempfindliche Medium (30) zu projizieren, wobei jede auswählbar lichtdurchlässige Zelle elektrisch zwischen einem lichtundurchlässigen Zustand und einem lichtdurchlässigen Zustand geschaltet werden kann, so dass die selektive Durchleitung des bilderzeugenden Lichts auf dem fotoempfindlichen Medium ein belichtetes Linienmuster (74) erzeugt.

**2.** Fotodrucker nach Anspruch 1, wobei der konkave Spiegel (82) einen sphärischen Spiegel umfasst.

**3.** Fotografischer Drucker nach Anspruch 1 oder 2, wobei das optische System (80) weiter eine asphärische Korrekturplatte (60) umfasst,wobei die Korrekturplatte vorzugsweise eine Schmidt-Platte umfasst.

**4.** Fotodrucker nach einem der Ansprüche 1 bis 3, wobei die Linse (72) eine zylinderförmige Linse umfasst, welche vorzugsweise in einer bogenförmigen Gestalt ausgeformt ist.


**Revendications**

**1.** Imprimante photographique comprenant un système optique (80) adapté pour produire des lignes d'éclairage dessinées qui se suivent dans l'espace (74) sur un support photosensible (30), ledit système optique (80) comprenant :

une source de rayonnement (12) servant à projeter un faisceau lumineux (14) ;
un miroir concave (16, 33, 42, 82) placé dans le chemin optique du faisceau lumineux (14) pour produire un faisceau lumineux réfléchi sensiblement collimaté (18) ;
une lentille cylindrique (34, 72) placée dans le chemin optique dudit faisceau lumineux collimaté (18) pour faire converger ledit faisceau lumineux collimaté sur au moins un axe et produire un faisceau lumineux convergent ; et
un modulateur de lumière spatial (20) comprenant un réseau de cellules sélectivement transmissives, ledit modulateur de lumière spatial (20) étant placé dans le chemin optique dudit faisceau lumineux convergent pour faire passer sélectivement ledit faisceau lumineux convergent afin de projeter un faisceau lumineux porteur d'image sur le support photosensible (30), chacune desdites cellules sélectivement transmissives pouvant être commandée électriquement entre un état bloquant la lumière et un état transmettant la lumière, de sorte que la transmission sélective de ladite lumière porteuse d'image produit une ligne d'éclairage dessinée (74) sur le support photosensible.

**2.** Imprimante photographique selon la revendication 1, dans laquelle ledit miroir concave (82) comprend un miroir sphérique.

**3.** Imprimante photographique selon la revendication 1 ou 2, dans laquelle ledit système optique (80) comprend en outre une plaque correctrice asphérique (60), ladite plaque correctrice étant de préférence une plaque de Schmidt.

**4.** Imprimante photographique selon l'une quelconque des revendications 1 à 3, dans laquelle ladite lentille (72) comprend une lentille cylindrique qui a de préférence une forme courbée.

FIG. 1

FIG. 2A

FIG. 2B

FIG. 3

FIG. 4

FIG. 5A

FIG. 5B

EP 0 922 242 B1